# EUROPÄISCHE PATENTANMELDUNG

(11) **EP 1 746 383 A1**
(43) Veröffentlichungstag der Anmeldung: **24.01.2007**
(21) Anmeldenummer: 05017550.4
(22) Anmeldetag: 11.08.2005
(51) Int. Cl.: G01B 5/00

(54) **Anbaukörper mit justierbarer Zielmarke zum Referenziern eines unzugänglichen Messpunktes**

(30) Priorität: 18.07.2005 EP 05015559
(71) Anmelder: metronom AG, 55120 Mainz (DE)
(72) Erfinder: Heimer, Dietmar, 55120 Mainz (DE); Nabs, David, 39288 Burg (DE)
(74) Vertreter: Grünecker, Kinkeldey, Stockmair & Schwanhäusser Anwaltssozietät

(57) **Zusammenfassung**

Die Erfindung betrifft einen Präzisionsmesskörper zur Bestimmung der räumlichen Lage wenigstens eines verdeckten Punkts eines Großbauteils durch präzise optische Vermessung der räumlichen Lage von wenigstens einem Messpunkt, wobei die relative Lage des wenigstens einen Messpunkts und des wenigstens einen verdeckten Punkts zueinander präzise vorbestimmt ist, umfassend: ein Trägerelement; wenigstens eine Aufnahme, worin jede Aufnahme mit dem Trägerelement verbunden ist und jede Aufnahme zum Aufnehmen wenigstens eines Anmesselements ausgebildet ist, wobei das wenigstens eine Anmesselement den wenigstens einen Messpunkt definiert; ein am Trägerelement angeordnetes Kopplungselement, das an ein an dem Großbauteil befestigtes Halteelement koppelbar ist; und worin wenigstens eine der Aufnahmen eine Justiereinrichtung umfasst, welche derart ausgebildet ist, dass die Position des wenigstens einen aufzunehmenden Anmesselements in Bezug auf das Trägerelement so vorjustierbar ist, dass nach der Kopplung des Kopplungselements an das Halteelement der wenigstens eine Messpunkt und der wenigstens eine verdeckte Punkt in der vorbestimmten relativen Lage zueinander sind.

## Beschreibung

### Gebiet der Erfindung

Die Erfindung betrifft einen Präzisionsmesskörper zur Bestimmung der räumlichen Lage wenigstens eines verdeckten Punkts eines Großbauteils.

### Stand der Technik

In der Vermessungstechnik werden bei der Vermessung von Geländetopografien, bei der Vermessung von Gebäuden oder bei der Montage und/oder Vermessung von Großbauteilen wie etwa im Industrieanlagen-, Flugzeug- oder Schiffsbau häufig ein sogenannter Lasertracker oder ein Laserradar eingesetzt. Diese werden an einem Ort mit bekannten Koordinaten aufgestellt und senden Lichtstrahlen aus, welche z.B. durch einen Prismenspiegel, der an einem zu vermessenden Punkt angebracht ist, zum Lasertracker zurückgeworfen wird. Der Lasertracker misst zwei Winkel des zurückgeworfenen Lichtstrahls und auf Grund des Laufzeitunterschieds die Entfemung zwischen dem Lasertracker und dem Messpunkt. Auf diese Weise kann die räumliche Lage des Messpunkts relativ zum Lasertracker ermittelt werden.

Es tritt jedoch dabei häufig das Problem auf, dass ein Punkt, dessen Koordinaten bestimmt werden sollen, für den Lichtstrahl nicht direkt zugänglich ist, sondern durch ein Objekt verdeckt wird. Es sind Hilfsmittel bekannt, die zur Vermessung von solchen verdeckten Punkten eingesetzt werden. Dazu werden zum Beispiel zwei Prismenspiegel in einem bekannten Abstand voneinander und in einem bekannten Abstand zu einem Ende einer Metallstange befestigt. Das Ende der Metallstange kann eine Spitze aufweisen, die auf den verdeckten Punkt gehalten wird. Der Abstand der Prismenspiegel zur Spitze sollte dabei ausreichend groß sein, um so dem Lasertracker freie Sicht auf die Prismenspiegel zu gewährleisten. Bei einer solchen Messstange liegen dabei die zwei Prismenspiegel und die Spitze auf einer Geraden, z.B. der Mittelachse der Stange. Durch die Vermessung der zwei nunmehr zugänglichen durch die Prismenspiegel definierten Messpunkte und auf Grund dessen, dass diese zwei Messpunkte und der verdeckte Punkt in bekannten Abständen auf einer Geraden liegen, können die Koordinaten des verdeckten Punkts ermittelt werden.

Eine andere Möglichkeit zur Bestimmung eines verdeckten Punkts besteht darin, lediglich einen Punkt auf einer Geraden durch den verdeckten Punkt mit vorgegebenem Abstand voneinander zu vermessen, falls zusätzlich die Richtung der Geraden bekannt ist.

Aus der optischen Messtechnik sind Prismenspiegel bekannt, die aus einer Würfelecke aus Glas bestehen, dessen Außenseiten verspiegelt sind und in ein kugelförmiges Gehäuse eingesetzt sind. Solche Anmesselemente werden Retroreflektoren genannt. Andere Anmesselemente sind z.B. optische Messmarken, die eine lichtreflektierende Oberflächenschicht haben und auch zur photogrammetrischen Vermessung eingesetzt werden.

Bei der Montage und/oder Vermessung von Großbauteilen ist es häufig erforderlich, derartige verdeckte Punkte mehrfach und über eine längere Zeitdauer zu bestimmen. Dazu ist es erforderlich, die Messstangen oder Messstäbe am Großbauteil geeignet zu haltern. Dabei sollte die Genauigkeit der Bestimmung der Lage des verdeckten Punkts über eine hinreichende Zeitdauer gewährleistet sein. Die Position des verdeckten Punkts kann beispielsweise durch eine im oder am Großbauteil fest angeordnete Halterung für den Messstab definiert sein.

Die Anforderungen an die Genauigkeit der Lage der Messpunkte liegt beispielsweise im Flugzeugbau bei besser als 0,05 mm. Derartige Genauigkeiten bei Messstäben mit Längen von bis zu einigen Metem erfordern zum Einen eine präzise Kalibrierbarkeit bzw. Justierbarkeit der relativen Lage der Messpunkte und des verdeckten Punkts zueinander, und zum Anderen werden betreffend die Stabilität der Verbindung des Messstabs mit dem Großbauteil und auch hinsichtlich der Stabilität des Messstabs selbst hohe Anforderungen gestellt.

Mit der oben genannten Messstange nach dem Stand der Technik ist eine Fertigung mit einer solchen Genauigkeit nicht zu bewerkstelligen, und eine Präzisionskalibrierung kann damit ebenfalls nicht durchgeführt werden. Weiterhin ist dabei nachteilig, dass eine solche Messstange in der Regel von Hand gehalten werden muss.

### Beschreibung der Erfindung

Angesichts der genannten Nachteile der aus dem Stand der Technik bekannten Messstange und den Erfordernissen bei der Montage und/oder Vermessung von Großbauteilen liegt der Erfindung die Aufgabe zu Grunde, einen Präzisionsmesskörper zur Verfügung zu stellen, mit dem die Koordinaten eines verdeckten Punkts bei Einzel- und/oder Wiederholungsmessungen mit großer Präzision bestimmt werden können.

Die zuvor genannte Aufgabe wird gelöst durch einen Präzisionsmesskörper zur Bestimmung der räumlichen Lage wenigstens eines verdeckten Punkts eines Großbauteils durch präzise optische Vermessung der räumlichen Lage von wenigstens einem Messpunkt, wobei die relative Lage des wenigstens einen Messpunkts und des wenigstens einen verdeckten Punkts zueinander präzise vorbestimmt ist, umfassend: ein Trägerelement; wenigstens eine Aufnahme, worin jede Aufnahme mit dem Trägerelement verbunden ist und jede Aufnahme zum Aufnehmen wenigstens eines Anmesselements ausgebildet ist, wobei das wenigstens eine Anmesselement den wenigstens einen Messpunkt definiert; ein am Trägerelement angeordnetes Kopplungselement, das an ein an dem Großbauteil befestigtes Halteelement koppelbar ist; und worin wenigstens eine der Aufnahmen eine Justiereinrichtung umfasst, welche derart ausgebildet ist, dass die Position des wenigstens einen aufzunehmenden Anmesselements in Bezug auf das Trägerelement so vorjustierbar ist, dass nach der Kopplung des Kopplungselements an das Halteelement der wenigstens eine Messpunkt und der wenigstens eine verdeckte Punkt in der vorbestimmten relativen Lage zueinander sind.

Ein derartiger Präzisionsmesskörper hat die nachfolgend beschriebenen Vorteile. Das Trägerelement stellt eine stabile Tragestruktur für die weiteren Bestandteile des Präzisionsmesskörpers zur Verfügung. Mit dem Kopplungselement, das an dem Präzisionsmesskörpers angeordnet ist, kann der Präzisionsmesskörper an ein Halteelement gekoppelt werden. Dabei ist die relative Lage des wenigstens einen Messpunkts und des wenigstens einen verdeckten Punkts zueinander präzise vorbestimmt. Durch die Verbindung des Kopplungselements mit dem Halteelement wird der Präzisionsmess Körper in einer vorbestimmten Lage gehalten, so dass der wenigstens eine verdeckte Punkt die vorkalibrierte relative Lage einnimmt. Dabei kann sich der verdeckte Punkt beispielsweise räumlich innerhalb oder außerhalb des Halteelements bzw. des Kopplungselements befinden.

Die wenigstens eine Aufnahme ist mit dem Stabelement verbunden und derart ausgebildet, dass jede Aufnahme wenigstens ein Anmesselement aufnehmen und halten kann. Jedes Anmesselement definiert dabei einen z.B. durch einen Lasertracker anmessbaren Messpunkt. Der Einsatz von Aufnahmen für die Anmesselemente hat gegenüber der direkten Befestigung der Anmesselemente auf dem Stabelement den Vorteil, dass die Anmesselemente einfach einzusetzen und z.B. für einen Austausch leicht entnehmbar sind.

Wenigstens eine Aufnahme umfasst eine Justiereinrichtung, welche derart ausgebildet ist, dass die Position des wenigstens einen aufzunehmenden Anmesselements in Bezug auf das Trägerelement so vorjustierbar ist, dass nach der Kopplung des Kopplungselements an das Halteelement der wenigstens eine Messpunkt und der wenigstens eine verdeckte Punkt in der vorbestimmten relativen Lage zueinander sind. Die präzise vorbestimmte relative Lage des wenigstens einen Messpunkts und des wenigstens einen verdeckten Punkts zueinander wird durch eine - bis auf gelegentliche Kontroll- und Nachkalibrierungen - einmalige Kalibrierung des Präzisionsmesskörpers erreicht, die vor den eigentlichen Messvorgängen mittels einer Kalibriervorrichtung durchgeführt wird. Die Kalibrierung kann beispielsweise derart erfolgen, dass an das Kopplungselement ein Probekörper angesetzt wird, der die relative Lage des im Nachhinein zu bestimmenden verdeckten Punkts vorgibt. Die Kalibrierung kann dabei mit optisch anzumessenden Anmesselementen durchgeführt werden, aber es können beispielsweise auch Targets (Anmesselemente) in Form von Antastkugeln für Koordinatenmessgeräte eingesetzt werden. Durch die Justiereinrichtung lässt sich im Gegensatz zu den Messstangen aus dem Stand der Technik eine präzise Justierung und Kalibrierung der genannten relativen Lage erzielen.

Zur Bestimmung der räumlichen Lage des wenigstens einen verdeckten Punkts und zur geeigneten vorherigen Kalibrierung können zusätzlich zu dem durch das wenigstens eine Anmesselement definierten wenigstens einen Messpunkt beispielsweise ein oder mehrere fixe Punkte (also Punkte des Großbauteils, die ihre räumliche Lage nicht ändern, wie z.B. Punkte auf der Drehachse bei Drehungen) eingesetzt werden. Weiterhin ist das Anbringen von ein oder mehreren Anmesspunkten am Großbauteil an für den Lasertracker erfassbaren Positionen möglich. Weiterhin kann auch eine Winkellage einer Ebene, welche den verdeckten Punkt und den wenigstens einen Messpunkt enthält, vorgegeben sein. Außer dem zu vermessenden wenigstens einen Messpunkt werden zur absoluten Bestimmung der räumlichen Lage des wenigstens einen verdeckten Punkts beispielsweise zwei weitere Messpunkte auf dem Großbauteil benötigt, wenn dieses keine fixen Punkte enthält. Im Falle eines fixen Punktes des Großbauteils wird ein weiterer Messpunkt am Großbauteil benötigt. Existiert eine vorgegebene Winkellage einer Ebene, welche einen verdeckten Punkt und den wenigstens einen Messpunkt des Präzisionsmesskörpers enthält, so genügt lediglich ein weiterer anmessbarer Messpunkt an dem Großbauteil oder ein fixer Punkt des Großbauteils, um die räumliche Lage zu bestimmen. Noch eine andere Möglichkeit ist, dass der wenigstens eine Messpunkt und der wenigstens eine verdeckte Punkt auf einer Geraden mit vorbestimmter Richtung und in einem vorbestimmten Abstand voneinander liegen, wobei dann mittels der Justiereinrichtung eine Kalibrierung dieser Richtung und des Abstands erfolgen kann.

Eine Weiterbildung des erfindungsgemäßen Präzisionsmesskörpers besteht in einem Präzisionsmesskörper zur Bestimmung der räumlichen Lage des wenigstens einen verdeckten Punkts des Großbauteils durch präzise optische Vermessung der räumlichen Lage von wenigstens zwei Messpunkten wobei die relative Lage der wenigstens zwei Messpunkte und des wenigstens einen verdeckten Punkts zueinander dadurch präzise vorbestimmt ist, dass die wenigstens zwei Messpunkte und der wenigstens eine verdeckte Punkt auf einer Geraden und in vorbestimmten Abständen voneinander liegen; worin: insgesamt wenigstens zwei Aufnahmen vorgesehen sind, worin jede Aufnahme mit dem Trägerelement verbunden ist und jede Aufnahme zum Aufnehmen wenigstens eines Anmesselements ausgebildet ist, wobei jedes Anmesselement einen der wenigstens zwei Messpunkte definiert; und nach der Kopplung des Kopplungselements an das Halteelement die wenigstens zwei Messpunkte und der wenigstens eine verdeckte Punkt präzise auf der Geraden und in präzise bekannten Abständen voneinander liegen.

In dieser Weiterbildung genügt das Vermessen der wenigstens zwei Messpunkte des Präzisionsmesskörpers, um die räumliche Lage des wenigstens einen verdeckten Punkts zu ermitteln, da die wenigstens zwei Messpunkte und der wenigstens eine verdeckte Punkt auf einer Geraden und in bekannten Abständen voneinander liegen. Die Kalibrierung wird in diesem Fall durch einer Feinjustierung der relativen Lage des wenigstens einen verdeckten Punkts und der wenigstens zwei Messpunkte mittels der Justiervorrichtung so durchgeführt, dass nach der Kopplung des Kopplungselements an das Halteelement die wenigstens zwei Messpunkte und der wenigstens eine verdeckte Punkt präzise auf der Geraden und in den präzise bekannten Abständen voneinander liegen.

Eine andere Weiterbildung des erfindungsgemäßen Präzisionsmesskörpers besteht in einem Präzisionsmesskörper zur Bestimmung der räumlichen Lage des wenigstens einen verdeckten Punkts eines Großbauteils durch präzise optische Vermessung der räumlichen Lage von wenigstens einem Messpunkt, wobei die relative Lage des wenigstens einen Messpunkts und des wenigstens einen verdeckten Punkts zueinander dadurch präzise vorbestimmt ist, dass der wenigstens eine Messpunkt und der wenigstens eine verdeckte Punkt auf einer Geraden liegen, welche eine vorbestimmte Richtung, vorzugsweise eine lotrechte Richtung, hat, worin: das wenigstens eine Anmesselement den wenigstens einen Messpunkt definiert; und nach der Kopplung des Kopplungselements an das Halteelement der wenigstens eine Messpunkt und der wenigstens eine verdeckte Punkt präzise auf der Geraden mit der vorbestimmten Richtung, vorzugsweise der lotrechten Richtung, und in einem präzise bekannten Abstand voneinander liegen.

Diese Weiterbildung des Präzisionsmesskörpers hat die nachfolgend beschriebenen Vorteile. Durch die Verbindung des Kopplungselements mit dem Halteelement wird der Präzisionsmesskörper in einer vorbestimmten räumlichen Richtung gehalten. Bevorzugt wird dieser Präzisionsmesskörper durch die Kopplung zwischen dem Kopplungselement und dem Halteelement bei lotrechter Ausrichtung am oberen Ende gehalten. Indem es dem Präzisionsmesskörper z.B. ermöglicht wird, gravitativ auszupendeln, wird dabei die exakte lotrechte Richtung der genannten Geraden eingenommen. In diesem Fall ist lediglich die Vermessung wenigstens eines Messpunkt nötig, um die räumliche Lage des wenigstens einen verdeckten Punkts zu bestimmen.

Eine andere Weiterbildung des erfindungsgemäßen Präzisionsmesskörpers besteht in einem Präzisionsmesskörper zur Bestimmung der räumlichen Lage des wenigstens einen verdeckten Punkts eines Großbauteils durch präzise optische Vermessung der räumlichen Lage von wenigstens drei Messpunkten, wobei die relative Lage der wenigstens drei Messpunkte und des wenigstens einen verdeckten Punkts zueinander präzise vorbestimmt ist, worin: wenigstens drei Aufnahmen vorgesehen sind, worin jede Aufnahme mit dem Trägerelement verbunden ist und jede Aufnahme zum Aufnehmen wenigstens eines Anmesselements ausgebildet ist, wobei jedes Anmesselement einen der wenigstens drei Messpunkte definiert; und nach der Kopplung des Kopplungselements an das Halteelement die wenigstens drei Messpunkte und der wenigstens eine verdeckte Punkt in der vorbestimmten relativen Lage zueinander sind.

In dieser Weiterbildung des erfindungsgemäßen Präzisionsmesskörpers lassen sich daran wenigsten drei Anmesselemente anordnen, wodurch wenigstens drei Messpunkte zur Verfügung stehen. Durch die Vermessung der wenigstens drei Messpunkte lässt sich der wenigstens eine verdeckte Punkt auf Grund der vorbestimmten relativen Lage bestimmen.

Eine andere Weiterbildung des erfindungsgemäßen Präzisionsmesskörpers und dessen Weiterbildungen besteht darin, dass die relative Lage des wenigstens einen verdeckten Punkts und des wenigstens einen Messpunkts, der wenigstens zwei Messpunkte bzw. der wenigstens drei Messpunkte zueinander dadurch bzw. zusätzlich präzise vorbestimmt ist, dass die präzise räumliche Lage wenigstens eines fixen Punkts des Großbauteils vorbestimmt ist und/oder dass wenigstens ein anmessbarer Punkt des Großbauteils präzise vermessen wird und/oder eine Raumrichtung, in der wenigstens zwei der genannten Punkte ausgerichtet sind, vorbestimmt ist und/oder eine Ebene, welche wenigstens drei der genannten Punkte enthält, vorbestimmt ist.

Dadurch werden bekannte räumliche Beziehungen als Nebenbedingungen in die Bestimmung des wenigstens einen verdeckten Punkts eingebracht und ermöglichen dadurch dessen Bestimmung mit möglichst wenigen zu vermessenden Punkten bzw. verbessern die Genauigkeit der Bestimmung.

Eine andere Weiterbildung des erfindungsgemäßen Präzisionsmesskörpers und dessen Weiterbildungen besteht darin, dass das Halteelement den wenigstens einen verdeckten Punkt umfassen und/oder definieren kann, oder worin das Kopplungselement nach der Kopplung an das Halteelement den wenigstens einen verdeckten Punkt umfassen und/oder definieren kann.

Auf diese Weise wird der Präzisionsmesskörper nahe an dem zu bestimmen wenigstens einen verdeckten Punkt angeordnet, was die Genauigkeit der Bestimmung verbessert.

Eine andere Weiterbildung des erfindungsgemäßen Präzisionsmesskörpers und dessen Weiterbildungen besteht darin, dass jede Aufnahme eine Justiereinrichtung umfassen kann.

Auf diese Weise ist es möglich, die Lage aller anmessbaren Messpunkte des Präzisionsmesskörpers zu justieren.

Eine andere Weiterbildung des erfindungsgemäßen Präzisionsmesskörpers und dessen Weiterbildungen besteht darin, dass das Trägerelement ein Stabelement umfassen kann, wobei das Kopplungselement an einem Ende des Stabelements angeordnet sein kann.

Auf diese Weise wird ein einfach herzustellender und wenig Raum einnehmender Präzisionsmesskörper zur Verfügung gestellt.

Eine andere Weiterbildung des erfindungsgemäßen Präzisionsmesskörpers, welcher ein Stabelement als Trägerelement umfasst, und dessen Weiterbildungen besteht darin, dass die Lage der wenigstens zwei Aufnahmen an dem Stabelement so gewählt ist, dass in Längsrichtung des Stabelements der Abstand zwischen dem Ende des Präzisionsmesskörpers, an dem das Kopplungselement angeordnet ist, und der dazu näher gelegenen Aufnahme kleiner ist als der Abstand zwischen der näher gelegenen Aufnahme und der entfemter gelegenen Aufnahme, vorzugsweise im Verhältnis von 1:2.

Dies hat den Vorteil, dass entlang des Stabelements in Richtung des verdeckten Punkts gesehen, der Abstand zwischen den wenigstens zwei Messpunkten größer ist als der Abstand zwischen dem Messpunkt, der dem verdeckten Punkt näher gelegen ist, und dem verdeckten Punkt selbst, weshalb bei der Bestimmung der Koordinaten des verdeckten Punkts aus den Koordinaten der wenigstens zwei Messpunkte zu kleineren Abmessungen hin extrapoliert wird, was die Genauigkeit dieser Bestimmung verbessert.

Eine andere Weiterbildung des erfindungsgemäßen Präzisionsmesskörpers und dessen Weiterbildungen besteht darin, dass das Kopplungselement eine Hülse, einen Zylinder, eine Kugel, eine ebene Fläche oder einen Mehrkant umfasst, wobei der Mehrkant vorzugsweise ein Dreikant, ein Vierkant oder ein Sechskant ist, und/oder worin das Kopplungselement eine Form aufweist, die nach der Kopplung an das Halteelement ein Bewegen oder ein Drehen des Trägerelements in Bezug auf das Halteelement verhindert.

Diese Weiterbildung hat den Vorteil, dass einfache und zweckmäßige Kopplungselemente zur Verfügung gestellt werden. Im Fall einer Hülse als Kopplungselement wird diese zum Koppeln auf einen entsprechend dimensionierten Zapfen eines Halteelements aufgesteckt. Im Fall eines Zylinders an einem Stabelement kann dessen Symmetrieachse beispielsweise parallel oder senkrecht zur Längsrichtung des Stabelements verlaufen. Zum Koppeln an ein Halteelement kann dieses in Form einer Zylinderschale ausgebildet sein. Im Fall einer Kugel als Kopplungselement kann diese zum Koppeln beispielsweise in eine geeignet dimensionierte Kugelschale aufgenommen werden. Dabei kann beispielsweise auch eine Magneteinrichtung zum kraftschlüssigen Halten eingesetzt werden. Wenn das Kopplungselement eine Form aufweist, die nach der Kopplung an das Halteelement ein Drehen des Stabelements um dessen Längsachse verhindert, kann ein außerhalb der Drehachse angeordneter verdeckter Punkt sicher vermessen werden, ohne dass sich die Gerade durch die Anmesselemente gegenüber dem verdeckten Punkt verdreht. Im Falle eines Mehrkants als Kopplungselement mit entsprechend ausgestaltetem Halteelement können dadurch mehrere Positionen des Präzisionsmesskörpers und somit auch weitere verdeckte Punkte vorbestimmt sein.

Eine andere Weiterbildung der zuvor genannten Weiterbildung besteht darin, dass der Mittelpunkt der Kugel den verdeckten Punkt definieren kann.

Dies hat den Vorteil, dass ein besonders ausgezeichneter und bei der Kalibrierung leicht zu vermessender Punkt als potentieller verdeckter Punkt gewählt werden kann, und es dadurch auf einfache Weise möglich ist, den verdeckten Punkt beispielsweise auf die geometrische Mittelachse eines runden Stabelements anzuordnen. Als potentieller verdeckter Punkt wird der Punkt relativ zum Präzisionsmesskörper bezeichnet, der nach dem Koppeln an das Halteelement identisch mit dem zu bestimmenden verdeckten Punkt ist.

Eine andere Weiterbildung des erfindungsgemäßen Präzisionsmesskörpers und dessen Weiterbildungen besteht darin, dass das Kopplungselement zur formschlüssigen Kopplung an das Halteelement ausgebildet sein kann.

Dies hat den Vorteil, dass zwischen dem Kopplungselement und dem Halteelement ein möglichst geringer oder gar kein Zwischenraum vorhanden ist, wodurch der Präzisionsmesskörper auch bei mehrmaligem Abkoppeln und Ankoppeln wieder die gleiche Lage einnimmt, bzw. dass nur eine möglichst geringe Abweichung davon auftritt.

Eine andere Weiterbildung des erfindungsgemäßen Präzisionsmesskörpers und dessen Weiterbildungen besteht darin, dass das Material des Kopplungselements Stahl, vorzugsweise V2A-Edelstahl, umfassen kann.

Dies hat den Vorteil, dass beispielsweise auch im Fall von Präzisionsmesskörpern in Form von langen Stäben oder im Fall von relativ schweren Präzisionsmesskörpem eine hinreichend stabile und zuverlässig wiederholbare Kopplung des Kopplungselements mit dem Halteelement erfolgen kann, ohne eine die Messgenauigkeit beeinflussende Verformung des Kopplungselements zu verursachen.

Eine andere Weiterbildung des erfindungsgemäßen Präzisionsmesskörpers und dessen Weiterbildungen besteht darin, dass jede Justiereinrichtung derart ausgebildet sein kann, dass die Position jedes aufzunehmenden Anmesselements in Bezug auf das Trägerelement dreidimensional justierbar ist, vorzugsweise in drei zueinander senkrechten Richtungen, wobei im Falle eines Stabelements als Trägerelement eine Richtung davon vorzugsweise die Längsrichtung des Stabelements ist.

Dies hat den Vorteil, dass der durch jedes Anmesselement definierte Messpunkt dreidimensional in Bezug auf das Trägerelement ausgerichtet werden kann, so dass der Messpunkt sowohl in eine Längsrichtung als auch senkrecht dazu justierbar ist. Vorzugsweise ist die Justiereinrichtung derart ausgestaltet, dass beispielsweise der Abstand zwischen zwei Messpunkten und/oder der Abstand zwischen einem Messpunkt und dem verdeckten Punkt lediglich durch Justierung in der Längsrichtung erfolgen kann und die Ausrichtung in der Ebene senkrecht zur Längsrichtung des Stabelements durch die Justierung in die zwei anderen Richtungen erfolgen kann, um dadurch die Messpunkte bzw. den Messpunkt und den verdeckten Punkt z.B. auf einer Gerade liegend zu justieren.

Eine andere Weiterbildung des erfindungsgemäßen Präzisionsmesskörpers und dessen Weiterbildungen besteht darin, dass jede Justiereinrichtung derart ausgebildet sein kann, dass sie mit einer Genauigkeit von besser als 0,1 mm, vorzugsweise besser als 0,05 mm, höchst vorzugsweise besser als 0,02 mm justierbar ist.

Dies hat den Vorteil, dass damit eine für die Fertigung und Montage und/oder Vermessung von Großbauteilen beispielsweise im Flugzeugbau erforderliche Genauigkeit erzielt wird.

Eine andere Weiterbildung des erfindungsgemäßen Präzisionsmesskörpers und dessen Weiterbildungen besteht darin, dass jede eine Justiereinrichtung umfassende Aufnahme ein Kernelement und jede Justiereinrichtung ein Stellelement umfassen kann, wobei das Kemelement fest mit dem Trägerelement verbunden ist und die Position des Stellelements in Bezug auf das Kemelement verstellbar ist, und wobei weiterhin das Stellelement zum Aufnehmen von wenigstens einem Anmesselement ausgebildet ist.

Weil jede eine Justiereinrichtung umfassende Aufnahme die jeweilige Justiereinrichtung umfasst, umfasst somit jede Aufnahme sowohl das jeweilige Kemelement als auch das jeweilige Stellelement. Dies hat den Vorteil, dass jede Aufnahme mittels des Kemelements fest mit dem Trägerelement verbunden sein kann und dabei bereit eine geeignete Vorgabe für die geometrische Lage des aufzunehmenden Anmesselements relativ zum Trägerelement zur Verfügung stellt. Eine Feineinstellung der entsprechenden Messpunkte bzw. des entsprechenden Messpunkts kann bei einer Kalibrierung mittels des Stellelements bewirkt werden, welches wenigstens ein Anmesselement, beispielsweise in einer Öffnung des Stellelements, aufnehmen kann, und durch Verstellen des Stellelements relativ zum Kernelement das wenigstens eine Anmesselement in seiner Position relativ zum Trägerelement verstellt werden kann.

Eine andere Weiterbildung der zuvor genannten Weiterbildung besteht darin, dass jede Justiereinrichtung weiterhin eine Verstelleinrichtung und/oder eine Feststelleinrichtung umfassen kann, wobei die Verstelleinrichtung zum Verstellen der Position des Stellelements in Bezug auf das Kemelement ausgebildet ist und die Feststelleinrichtung zum Feststellen des Stellelements in Bezug auf das Kemelement ausgebildet ist.

Durch die Verstelleinrichtung, beispielsweise in Form von ein oder mehreren Schrauben mit Feingewinde und/oder ein oder mehreren Exzenterschrauben; kann das Stellelement relativ zum Kemelement und somit relativ zum Trägerelement verstellt werden. Durch die Feststelleinrichtung, beispielsweise in Form von ein oder mehreren Kontermuttern und/oder ein oder mehreren Klemmschrauben kann das Stellelement in seiner kalibrierten Position festgestellt werden, so dass ein weiteres unerwünschtes Verstellen verhindert werden kann.

Eine andere Weiterbildung des erfindungsgemäßen Präzisionsmesskörpers und dessen Weiterbildungen besteht darin, dass jede Aufnahme wenigstens eine Magneteinrichtung umfassen kann, die derart ausgebildet ist, dass jeweils wenigstens ein Anmesselement durch magnetische Kräfte auf der Aufnahme haltbar ist.

Dies hat den Vorteil, dass das jeweilige Anmesselement auf einfache Weise angebracht und entfemt werden kann, und dass es sicher gehalten werden kann.

Eine andere Weiterbildung des erfindungsgemäßen Präzisionsmesskörpers mit einem Stabelement als Trägerelement und dessen Weiterbildungen besteht darin, dass das Stabelement einen kreisförmigen Querschnitt haben kann.

Diese Weiterbildung hat den Vorteil, das ein einfaches und leicht herzustellendes Stabelement zur Verfügung gestellt wird.

Eine andere Weiterbildung des erfindungsgemäßen Präzisionsmesskörpers mit einem Stabelement als Trägerelement und dessen Weiterbildungen besteht darin, dass das Stabelement ein Rohr umfassen kann.

Dies hat den Vorteil, dass das Stabelement leicht und stabil ist.

Eine andere Weiterbildung des erfindungsgemäßen Präzisionsmesskörpers und dessen Weiterbildungen besteht darin, dass das Trägerelement für jede Aufnahme eine Aussparung aufweisen kann, in der die jeweilige Aufnahme angeordnet ist.

Auf diese Weise kann der Messpunkt abgesenkt werden. Dies hat z.B. für den Fall eines Stabelements als Trägerelement den Vorteil, dass jede Aufnahme in einer Richtung senkrecht zur Längsrichtung des Stabelements zur Mitte des Stabelements hin verlagert werden kann, falls eine den wenigstens einen Messpunkt und/oder den verdeckten Punkt enthaltende Gerade wenigstens teilweise innerhalb des Stabelements verläuft. Im Falle eines Rohrs als Stabelement können dadurch die Messpunkte bzw. kann der Messpunkt in Richtung der Symmetrieachse verlagert werden.

Eine andere Weiterbildung der zuvor genannten Weiterbildung besteht für den Fall eines Stabelements als Trägerelement darin, dass jede Aussparung derart ausgestaltet sein kann, dass der durch das wenigstens eine aufzunehmende Anmesselement definierte wenigstens eine Messpunkt im geometrischen Schwerpunkt des Querschnitts des Stabelements angeordnet ist.

Im Fall eines Stabelements mit kreisförmigem Querschnitt, beispielsweise ein Rohr, kann auf diese Weise eine den wenigstens einen Messpunkt enthaltende Gerade genau auf der Symmetrieachse des Stabelements verlaufen, wenn der verdeckte Punkt ebenfalls auf der Symmetrieachse liegt. Dies hat den Vorteil, dass beispielsweise eine genau Fertigung des Kopplungselements in Form einer Hülse durch ein Drehverfahren erfolgen kann. Im Fall einer Kugel als Kopplungselement kann diese im Falle eines Rohrs auf einfache Weise an einem Ende davon angeordnet werden, so dass der Mittelpunkt der Kugel auf der Symmetrieachse, also auch auf der Geraden liegt.

Eine andere Weiterbildung des erfindungsgemäßen Präzisionsmesskörpers und dessen Weiterbildungen besteht darin, dass jede Aufnahme zum Aufnehmen wenigstens eines Retroreflektors, einer optischen Messmarke, einer lichtreflektierenden Kugel, oder eines anderen optisch oder taktil anmessbaren Objekts als Anmesselement ausgebildet sein kann.

Dadurch wird sichergestellt, dass gebräuchliche Anmesselemente eingesetzt werden können.

Eine andere Weiterbildung des erfindungsgemäßen Präzisionsmesskörpers mit einem Stabelement als Trägerelement und dessen Weiterbildungen besteht darin, dass entlang des Stabelements wenigstens ein Verstärkungselement angeordnet sein kann, vorzugsweise zwei Verstärkungselemente angeordnet sein können, um die Tragestruktur zu verstärken.

Auf diese Weise ist es möglich, bei langen Stabelementen die Tragestruktur zu verstärken, so dass beispielsweise bei einer schrägen bis horizontalen Ausrichtung des Präzisionsmesskörpers ein das Messergebnis verfälschendes Durchbiegen des Stabelements verhindert wird.

Eine andere Weiterbildung der zuvor genannten Weiterbildung besteht darin, dass jedes Verstärkungselement ein Rohr umfassen kann.

Dies hat den Vorteil, dass das jedes Verstärkungselement selbst stabil und leicht sein kann.

Eine andere Weiterbildung der beiden zuvor genannten Weiterbildungen besteht darin, dass das Material des Verstärkungselements Aluminium und/oder Plastik und/oder Titan und/oder GFK-Material und/oder CFK-Material, wobei die Fasern des CFK-Materials vorzugsweise im Wesentlichen unidirektional in einer Längsrichtung des Trägerelements verlaufen, und/oder ein anderes leichtes und stabiles Material umfassen kann.

Dies hat den Vorteil, dass das Verstärkungselement besonders leicht und dennoch stabil sein kann. Mit GFK-Material wird hier Glas-Faser-Kunststoff bezeichnet.

Eine andere Weiterbildung des erfindungsgemäßen Präzisionsmesskörpers und dessen Weiterbildungen besteht darin, dass das Material des Trägerelements Aluminium und/oder Plastik und/oder Titan und/oder GFK-Material und/oder CFK-Material, wobei die Fasern des CFK-Materials vorzugsweise im Wesentlichen unidirektional in einer Längsrichtung des Trägerelements verlaufen, und/oder ein anderes leichtes und stabiles Material umfassen kann.

Auf diese Weise kann das Trägerelement besonders leicht und im Fall von CFK-Material (Karbon-Faser-Kunststoff) sehr leicht, sehr stabil und äußerst unempfindlich gegenüber Temperaturschwankungen ausgebildet werden. Im Fall CFK-Material mit unidirektionalen Fasern ist zudem noch eine Unempfindlichkeit gegen Luftfeuchtigkeit gewährleistet. Denn im Gegensatz dazu zeigen beispielsweise kreuzgewickelte CFK-Stäbe bzw. CFK-Rohre über längere Zeiträume eine Ausdehnung durch Feuchtigkeitsaufnahme.

Weitere bevorzugte Ausführungsformen der Erfindung werden im Nachfolgenden unter Bezugnahme auf die Zeichnungen beschrieben.

### Kurzbeschreibung der Zeichnungen

- Fig. 1 a: zeigt eine schematische Darstellung der Problematik bei der Bestimmung eines verdeckten Punkts und eine erste Ausführungsform des erfindungsgemäßen Präzisionsmesskörpers.
- Fig. 1b: zeigt eine schematische Darstelfüng der Bestimmung eines verdeckten Punkts und eine erste Ausführungsform des erfindungsgemäßen Präzisionsmesskörpers.
- Fig. 2: zeigt eine schematische Darstellung der Bestimmung eines verdeckten Punkts auf eine andere Weise und eine zweite Ausführungsform des erfindungsgemäßen Präzisionsmesskörpers.
- Fig. 3: zeigt eine dritte Ausführungsform des erfindungsgemäßen Präzisionsmesskörpers.
- Fig. 4: zeigt eine vierte Ausführungsform des erfindungsgemäßen Präzisionsmesskörpers.
- Fig. 5: zeigt eine fünfte Ausführungsform des erfindungsgemäßen Präzisionsmesskörpers.
- Fig. 6: zeigt eine sechste Ausführungsform des erfindungsgemäßen Präzisionsmesskörpers.
- Fig. 7: zeigt eine siebente Ausführungsform des erfindungsgemäßen Präzisionsmesskörpers.

### Beschreibung der Ausführungsformen

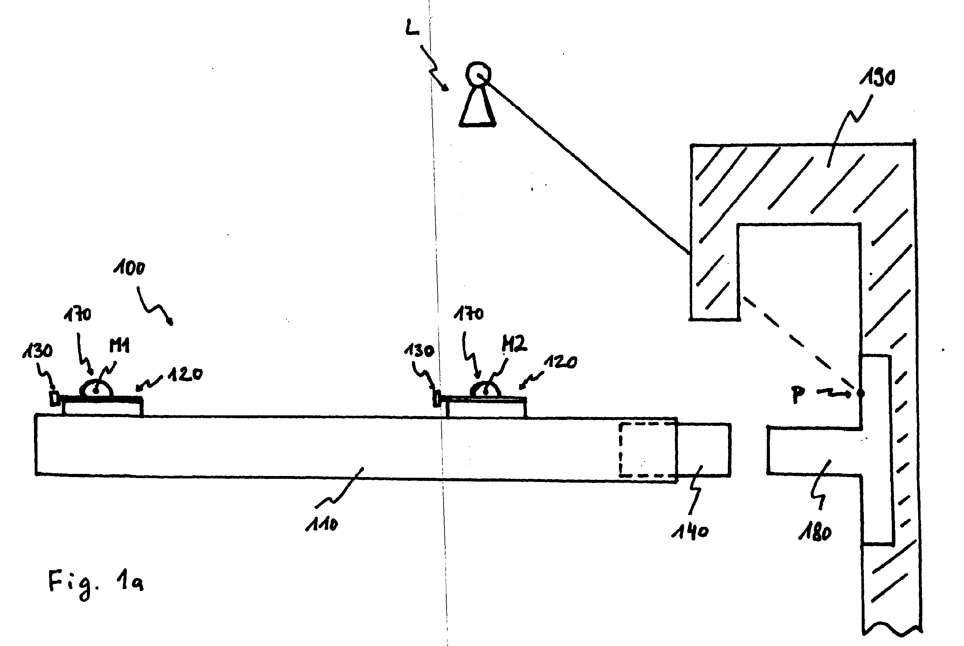

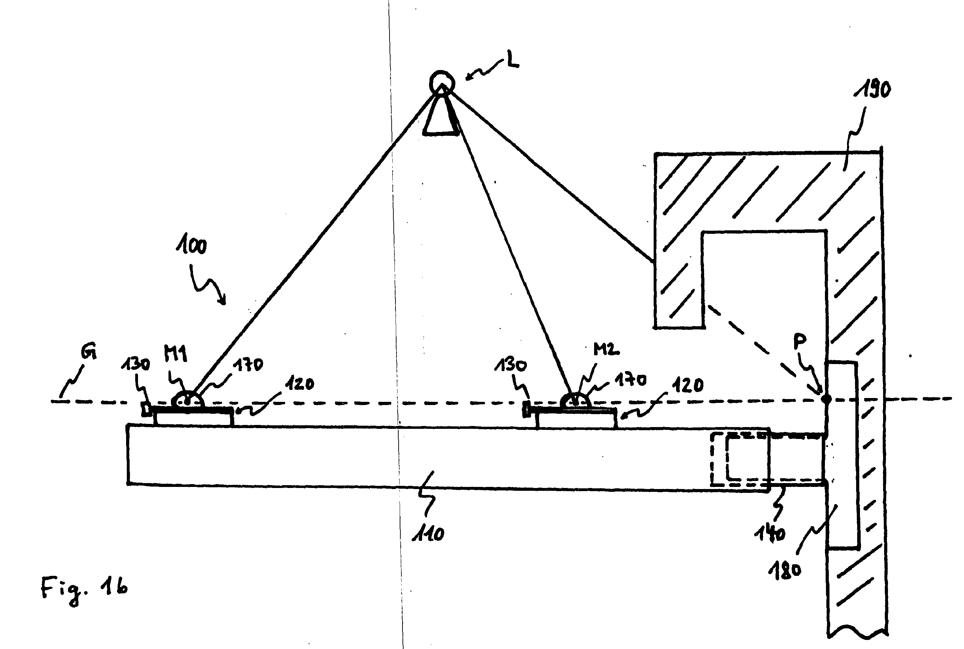

Fig. 1 veranschaulicht die bei der Montage und/oder Vermessung von Großbauteilen 190 auftretende Problematik. Ein Lasertracker L steht an einer festen definierten Position. Die räumliche Lage des Punkts P soll bestimmt werden. Dieser ist jedoch wie hier gezeigt für den Laserstrahl nicht direkt zugänglich da er durch das Großbauteil 190 selbst verdeckt wird. Die Koordinaten des verdeckten Punkts P können jedoch mittels dem erfindungsgemäßen Präzisionsmesskörpers 100 um einen vorbestimmten Betrag mit einem Offset versehen werden.

Der Präzisionsmesskörper 100 weist ein Stabelement 110 als Tragestruktur auf. Am rechten Ende des Stabelements 110 ist ein Kopplungselement 140 angeordnet, welches mit dem Halteelement 180 formschlüssig gekoppelt werden kann, wobei das Halteelement 180 an dem Großbauteil 190 befestigt ist und in diesem Fall den zu bestimmenden verdeckten Punkt P umfasst. Die genaue Lage des verdeckten Punkts P relativ zum Halteelement 180 ist bekannt. An dem Stabelement 110 sind zwei Aufnahmen 120 für jeweils ein Anmesselement 170 angeordnet, welche die Messpunkte M1 und M2 definieren. Die Anmesselemente 170 sind in ihrer relativen Lage bezüglich des Stabelements 110 durch jeweils eine Justiereinrichtung 130 justierbar.

Vor dem tatsächlichen Einsatz zur Bestimmung des verdeckten Punkts P wird der Präzisionsmesskörper mit Hilfe einer Kalibriereinrichtung und unter Verwendung der Justiereinrichtung präzise so justiert, dass nach dem Koppeln an das Halteelement 180 die Messpunkte M1, M2 und der verdeckte Punkt genau auf einer Geraden liegen und die Abstände zwischen den Punkten M 1, M2 und P genau bekannt sind.

In Fig. 1b ist die gleiche Situation wie in Fig. 1a gezeigt, wobei der Präzisionsmesskörper 100 jedoch über das Kopplungselement 140 mit dem Halteelement 180 und somit auch an das Großbauteil 190 gekoppelt ist. Mit Hilfe des Lasertrackers L können nun von den Messpunkte M1 und M2 die Koordinaten gemessen werden, und weil die Punkte M1, M2 und P genau auf einer Geraden G liegen, können unter Verwendung der bekannten Punktabstände auch die Koordinaten des verdeckten Punkts P ermittelt werden.

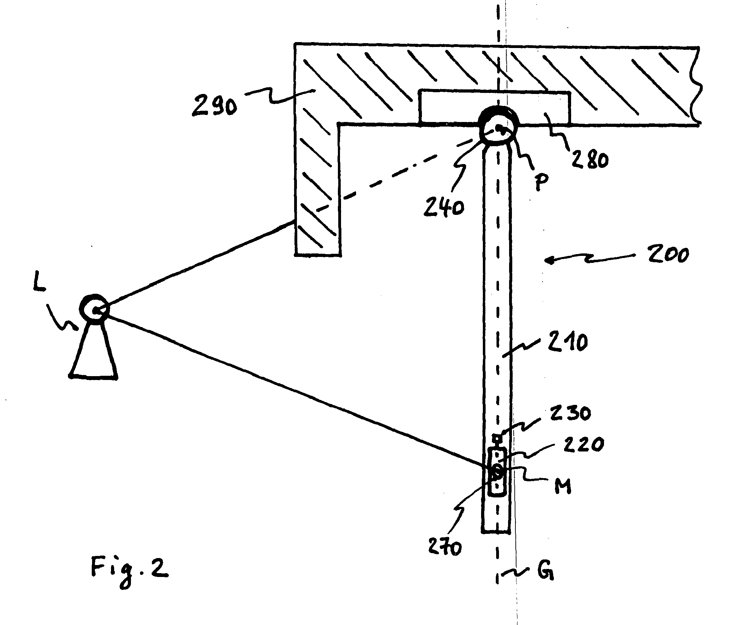

In Fig. 2 ist eine andere Möglichkeit zur Bestimmung eines verdeckten Punkts P und eine zweite Ausführungsform des erfindungsgemäßen Präzisionsmesskörpers gezeigt. Ähnliche Bezugszeichen wie in Fig. 1a, 1 b bezeichnen hier gleiche Bestandteile, wobei hier lediglich die Hunderterzahl in 2 abgeändert wurde, und zur Vermeidung von Wiederholungen wird hier in der Beschreibung der Zeichnung nur auf die Unterschiede Bezug genommen.

In diesem Fall befindet sich der verdeckte Punkt P an einer Decke eines Großbauteils 290. Bei der Bestimmung des Punkts P wird hier davon Gebrauch gemacht, dass dessen Lage auch durch eine Gerade G mit bekannter Richtung durch den verdeckten Punkt P und einem gemessenen Punkt M auf der Geraden, der einen bekannten Abstand zu P hat, festgelegt ist. In diesem Beispiel wird ein Präzisionsmesskörper 200 eingesetzt, der lediglich eine Aufnahme für ein Anmesselement 270 umfasst Das Kopplungselement 240 umfasst hier eine Kugel, die z.B. über eine Magneteinrichtung in dem Kopplungselement 240 und/oder in dem Halteelement 280 angeordnet ist. Das Halteelement 280 umfasst hier eine Kugelschale, die formschlüssig mit der Kugel 240 ist.

Die Anordnung ist derart gewählt, dass der Mittelpunkt der Kugel 240 nach der Kopplung den verdeckten Punkt repräsentiert. Die Aufnahme 220 umfasst eine Justiereinrichtung 230 mit der die Lage der Punkts M relativ zum Stabelement 210 präzise justiert werden kann, so dass der Messpunkt M und der verdeckte Punkt P in einem bekannten Abstand auf einer Geraden G mit einer bekannten Richtung liegen. In diesem Fall ist der Präzisionsmesskörper 200 so ausgebildet, dass die Gerade G genau lotrecht verläuft, wenn der Präzisionsmesskörper 200 sich gravitativ auspendelt.

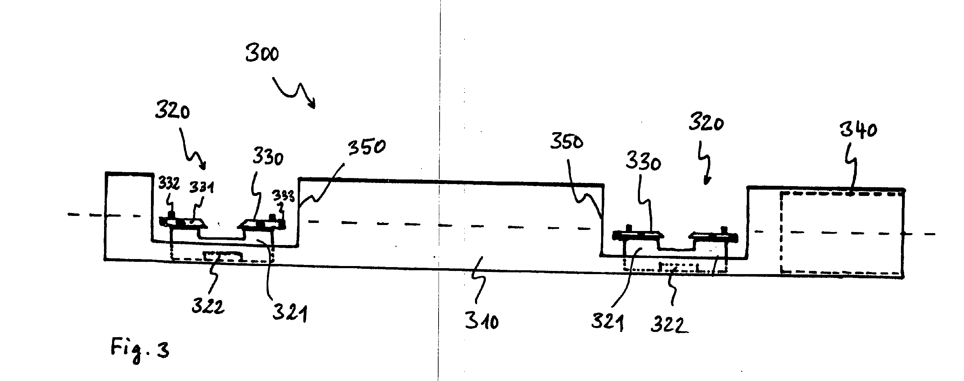

In Fig. 3 ist eine dritte Ausführungsform des erfindungsgemäßen Präzisionsmesskörpers gezeigt. Ähnliche Bezugszeichen wie in den vorherigen Figuren bezeichnen hier gleiche Bestandteile, wobei hier lediglich die Hunderterzahl in 3 abgeändert wurde, und zur Vermeidung von Wiederholungen wird hier in der Beschreibung der Zeichnung nur auf die Unterschiede Bezug genommen.

Der hier gezeigte Präzisionsmesskörper 300 umfasst ein Rohr 310 als Stabelement, welches aus CFK-Material gefertigt ist. Am rechten Ende des Stabelements ist in dem Rohr eine präzise gedrehte Hülse 340 als Kopplungselement befestigt, beispielsweise durch Verkleben. In das CFK-Rohr 310 sind Aussparungen 350 eingefräst, so dass in diese Aussparungen 350 je eine Aufnahme 320 in dem Rohr angeordnet werden können. Jede Aufnahme 320 umfasst in diesem Fall Kemelement 321, welches fest im Innem des Rohrs 310 angeordnet ist, eine Justiereinrichtung 330 und eine Magneteinrichtung 322. Jede Magneteinrichtung dient dem kraftschlüssigen Halten eines Anmesselements, das auf die Aufnahme 320 aufgebracht wird. Jede der Justiereinrichtungen 330 umfasst hier ein Stellelement 331, z.B. in Form einer Metallzunge mit kreisförmigem Ausschnitt zum Aufnehmen eines Anmesselements, worin das Stellelement 331 gegenüber dem Kemelement 321 durch Verstellschrauben 332 verstellbar ist, und mittels Feststellschrauben 333 festgestellt werden kann.

Die Lage der Messpunkte, die durch die aufzunehmenden Anmesselemente definiert sind, wird so justiert, dass sie auf der Mittelachse der gedrehten Hülse 340 liegen. Dies hat den Vorteil, dass dann auch der verdeckte Punkt auf dieser Achse liegen muss, was eine präzise Definition des verdeckten Punkts im entsprechenden Halteelement ermöglicht.

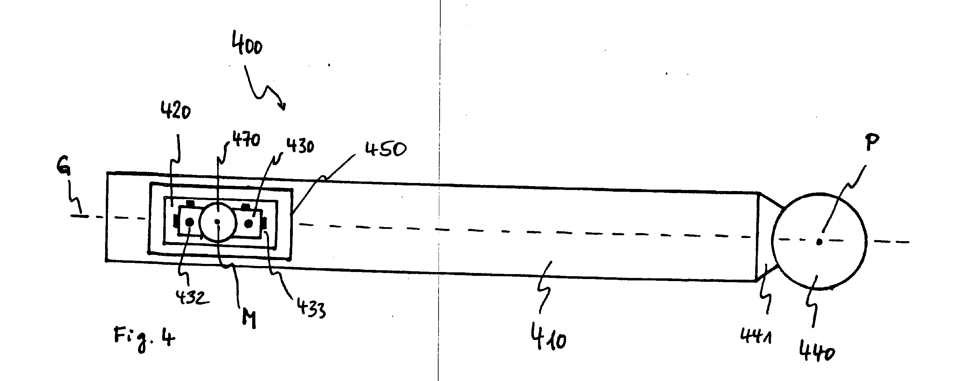

In Fig. 4 ist eine vierte Ausführungsform des erfindungsgemäßen Präzisionsmesskörpers dargestellt. Ähnliche Bezugszeichen wie in den vorherigen Figuren bezeichnen hier gleiche Bestandteile, wobei hier lediglich die Hunderterzahl in 4 abgeändert wurde, und zur Vermeidung von Wiederholungen wird hier in der Beschreibung der Zeichnung nur auf die Unterschiede Bezug genommen. Hinsichtlich der Aussparung 450, die hier in Draufsicht gezeigt ist, wird Bezug auf die entsprechenden Ausführungen zu Fig. 3 genommen.

Hier ist lediglich genau eine Aufnahme 420 vorhanden und das Kopplungselement 440, 441 umfasst eine Kugel 440. Weiterhin kann in dieser Ausführungsform das Kopplungselement 440, 441 einen temperaturkompensierenden Kopf 441 umfassen, um Längenänderungen der Kugel 440 zu kompensieren. Der Messpunkt M des Anmesselements und der Mittelpunkt P der Kugel 440 liegen auf der Geraden G, welche vorzugsweise mit der Mittelachse des Stabelements übereinstimmt. Hinsichtlich der Justiereinrichtung 430 wird auf die zuvor dargelegten Ausführungen Bezug genommen.

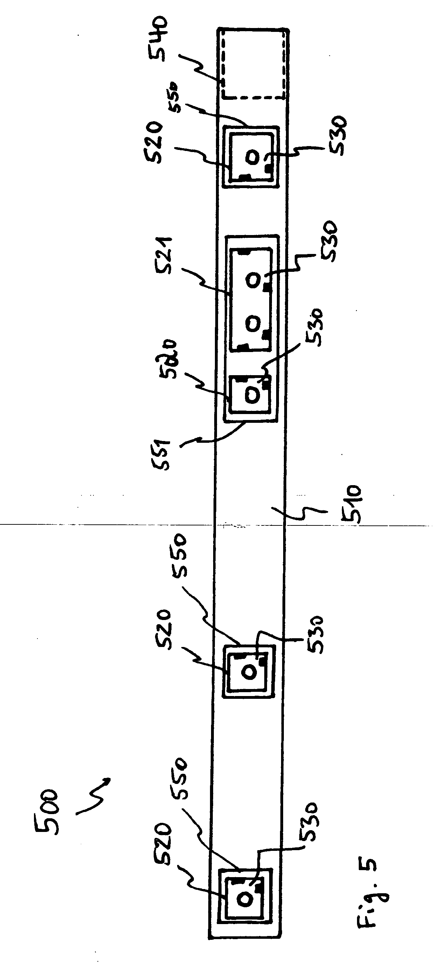

In Fig. 5 ist eine fünfte Ausführungsform des erfindungsgemäßen Präzisionsmesskörpers dargestellt. Ähnliche Bezugszeichen wie in den vorherigen Figuren bezeichnen hier gleiche Bestandteile, wobei hier lediglich die Hunderterzahl in 5 abgeändert wurde, und zur Vermeidung von Wiederholungen wird hier in der Beschreibung der Zeichnung nur auf die Unterschiede Bezug genommen. Der Unterschied zu dem in Fig. 3 dargestellten Präzisionsmesskörper besteht hier darin, dass die Darstellung in Draufsicht ist, und dass im Stabelement 510 vier Aussparungen 550, 551 vorgesehen sind, wobei die Aussparung 551 größer als die Aussparungen 550 ist und darin zwei Aufnahmen angeordnet sind.

Weiterhin ist in diesem Beispiel die Aufnahme 521 zum Aufnehmen von zwei Anmesselementen geeignet ausgebildet. Auf diese Weise können verschiedene Kombinationen von Abständen zwischen den Messpunkten und dem verdeckten Punkt in einem Präzisionsmesskörper realisiert werden. Hinsichtlich der Justiereinrichtungen 530 wird auf die zuvor dargelegten Ausführungen Bezug genommen.

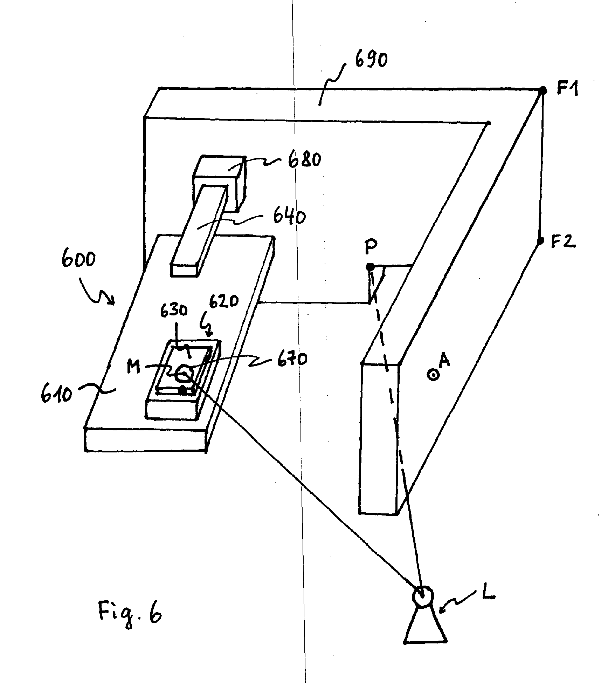

In Fig. 6 ist eine sechste Ausführungsform des erfindungsgemäßen Präzisionsmesskörpers dargestellt. Ähnliche Bezugszeichen wie in den vorherigen Figuren bezeichnen hier gleiche Bestandteile, wobei hier lediglich die Hunderterzahl in 6 abgeändert wurde, und zur Vermeidung von Wiederholungen wird hier in der Beschreibung der Zeichnung nur auf die Unterschiede Bezug genommen.

Im Gegensatz zu den vorherigen Ausführungsformen besteht das Trägerelement hier nicht aus einem Stabelement sondern aus einer länglichen quaderförmigen Platte 610. Das Kopplungselement umfasst hier einen länglichen quaderförmigen Stab 640, welcher z.B. auf das Trägerelement 610 aufgeklebt oder damit verschraubt ist und formschlüssig in das Halteelement 680 passt. Weiterhin ist in dieser Ausführungsform lediglich eine Aufnahme 620 für ein Anmesselement 670 vorhanden, welches einen Messpunkt M definiert.

Der zu bestimmende verdeckte Punkt P wird in diesem Fall beispielsweise durch die Lage des Messpunkts M und zweier fixer Punkte F1, F2 definiert. Die fixen Punkte F1, F2 können dadurch vorgegeben sein, dass die Kante des Großbauteils 690, welche diese beiden Punkte F1, F2 enthält, eine bei der Montage räumlich feste Drehachse darstellt. Indem die relative Lage vom M, F1, F2 und P vorbestimmt ist, kann somit durch Vermessung des Messpunkts M die räumliche Lage des verdeckten Punkts P bestimmt werden.

Eine andere Möglichkeit zur Bestimmung des verdeckten Punkts P besteht darin, dass zum Beispiel lediglich der Punkt F1 ein fixer Punkt (Drehpunkt) ist und am Großbauteil 690 ein anmessbarer Punkt A vorgesehen ist. Auf diese Weise wird durch das Vermessen der räumlichen Lage der Punkte M und A, sowie durch das Bekanntsein des fixen Punkts F1 die Lage des verdeckten Punkts definiert, der somit bestimmt werden kann.

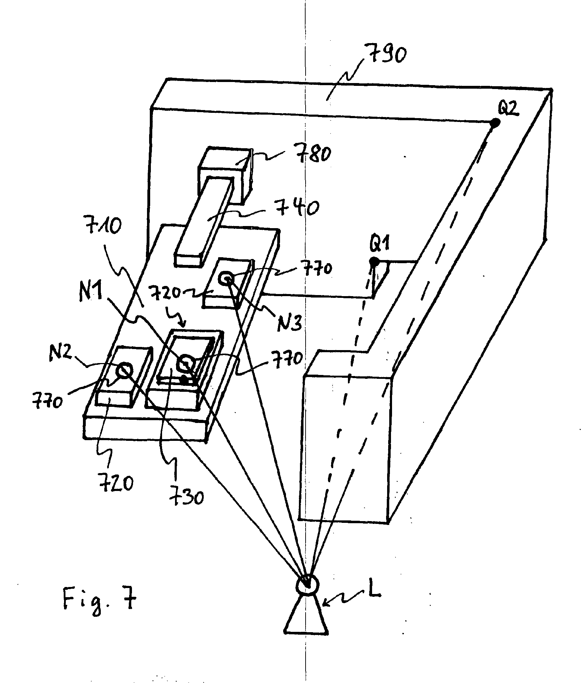

In Fig. 7 ist eine siebente Ausführungsform des erfindungsgemäßen Präzisionsmesskörpers dargestellt. Ähnliche Bezugszeichen wie in den vorherigen Figuren bezeichnen hier gleiche Bestandteile, wobei hier lediglich die Hunderterzahl in 7 abgeändert wurde, und zur Vermeidung von Wiederholungen wird hier in der Beschreibung der Zeichnung nur auf die Unterschiede Bezug genommen.

Im Unterschied zur Ausführungsform nach Fig. 6 sind hier auf dem Trägerelement 710 drei Aufnahmen 720 angeordnet, welche durch die aufnehmbaren Anmesselemente 770 die drei Messpunkte N1, N2, N3 definieren. In diesem Beispiel ist lediglich für eine Aufnahme eine Justiereinrichtung 730 vorgesehen. Die relative Lage der Messpunkte N1, N2, N3 zu den zwei verdeckten Punkten Q1, Q2 ist durch Kalibrierung und Justierung mittels der Justiereinrichtung 730 vorbestimmt. Durch Vermessen der räumliche Lage der Messpunkte N1, N2, N3 könne die zwei verdeckten Punkte Q1, Q2 z.B. über die vorbestimmten Abstandsbeziehungen bestimmt werden.

## Patentansprüche

1. Präzisionsmesskörper (100; 200; 300; 400; 500; 600; 700) zur Bestimmung der räumlichen Lage wenigstens eines verdeckten Punkts (P; Q1, Q2) eines Großbauteils (190; 290; 690; 790) durch präzise optische Vermessung der räumlichen Lage von wenigstens einem Messpunkt (M; M1, M2; N1, N2, N3), wobei die relative Lage des wenigstens einen Messpunkts (M; M1, M2; N1, N2, N3) und des wenigstens einen verdeckten Punkts (P; Q1, Q2) zueinander präzise vorbestimmt ist, umfassend:
ein Trägerelement (110; 210; 310; 410; 510; 610; 710);
wenigstens eine Aufnahme (120; 220; 320; 420; 520, 521; 620; 720), worin jede Aufnahme (120; 220; 320; 420; 520, 521; 620; 720) mit dem Trägerelement (110; 210; 310; 410; 510; 610; 710) verbunden ist und jede Aufnahme (120; 220; 320; 420; 520, 521; 620; 720) zum Aufnehmen wenigstens eines Anmesselements (170; 270; 470; 670; 770) ausgebildet ist, wobei das wenigstens eine Anmesselement (170; 270; 470; 670; 770) den wenigstens einen Messpunkt (M; M1, M2; N1, N2, N3) definiert;
ein am Trägerelement (110; 210; 310; 410; 510; 610; 710) angeordnetes Kopplungselement (140; 240; 340; 440; 540; 640; 740), das an ein an dem Großbauteil (190; 290; 680; 780) befestigtes Halteelement (180; 280; 680; 780) koppelbar ist; und
worin wenigstens eine der Aufnahmen (120; 320; 520, 521; 620; 720) eine Justiereinrichtung (130; 230; 330; 430; 530; 630; 730) umfasst, welche derart ausgebildet ist, dass die Position des wenigstens einen aufzunehmenden Anmesselements (170; 270; 470; 670; 770) in Bezug auf das Trägerelement (110; 210; 310; 410; 510; 610; 710) so vorjustierbar ist, dass nach der Kopplung des Kopplungselements (140; 240; 340; 440; 540; 640; 740) an das Halteelement (180; 280; 680; 780) der wenigstens eine Messpunkt (M; M1, M2; N1, N2, N3) und der
wenigstens eine verdeckte Punkt (P; Q1, Q2) in der vorbestimmten relativen Lage zueinander sind.

2. Präzisionsmesskörper (100; 300; 500) nach Anspruch 1 zur Bestimmung der räumlichen Lage des wenigstens einen verdeckten Punkts (P; Q1, Q2) des Großbauteils (190) durch präzise optische Vermessung der räumlichen Lage von wenigstens zwei Messpunkten (M1, M2), wobei die relative Lage der wenigstens zwei Messpunkte (M1, M2) und des wenigstens einen verdeckten Punkts (P; Q1, Q2) zueinander **dadurch** präzise vorbestimmt ist, dass die wenigstens zwei Messpunkte (M1, M2) und der wenigstens eine verdeckte Punkt (P; Q1, Q2) auf einer Geraden (G) und in vorbestimmten Abständen voneinander liegen; worin:
insgesamt wenigstens zwei Aufnahmen (120; 320; 520, 521) vorgesehen sind, worin jede Aufnahme (120; 320; 520, 521) mit dem Trägerelement (110; 310; 510) verbunden ist und jede Aufnahme (120; 320; 520, 521) zum Aufnehmen wenigstens eines Anmesselements (170; 270; 470) ausgebildet ist, wobei jedes Anmesselement (170; 270; 470) einen der wenigstens zwei Messpunkte (M1, M2) definiert; und
nach der Kopplung des Kopplungselements (140; 340; 540) an das Halteelement (180) die wenigstens zwei Messpunkte (M1, M2) und der wenigstens eine verdeckte Punkt (P; Q1, Q2) präzise auf der Geraden (G) und in präzise bekannten Abständen voneinander liegen.

3. Präzisionsmesskörper (200; 400) nach Anspruch 1 zur Bestimmung der räumlichen Lage des wenigstens einen verdeckten Punkts (P; Q1, Q2) eines Großbauteils (290) durch präzise optische Vermessung der räumlichen Lage von wenigstens einem Messpunkt (M), wobei die relative Lage des wenigstens einen Messpunkts (M) und des wenigstens einen verdeckten Punkts (P; Q1, Q2) zueinander **dadurch** präzise vorbestimmt ist, dass der wenigstens eine Messpunkt (M) und der wenigstens eine verdeckte Punkt (P; Q1, Q2) auf einer Geraden (G) liegen, welche eine vorbestimmte Richtung, vorzugsweise eine lotrechte Richtung, hat, worin:
das wenigstens eine Anmesselement (270; 470) den wenigstens einen Messpunkt (M) definiert; und
nach der Kopplung des Kopplungselements (140; 340; 540) an das Halteelement (180) der wenigstens eine Messpunkt (M) und der wenigstens eine verdeckte Punkt (P; Q1, Q2) präzise auf der Geraden (G) mit der vorbestimmten Richtung, vorzugsweise der lotrechten Richtung, und in einem präzise bekannten Abstand voneinander liegen.

4. Präzisionsmesskörper (700) nach Anspruch 1 zur Bestimmung der räumlichen Lage des wenigstens einen verdeckten Punkts (P; Q1, Q2) eines Großbauteils (190; 290) durch präzise optische Vermessung der räumlichen Lage von wenigstens drei Messpunkten (N1, N2, N3), wobei die relative Lage der wenigstens drei Messpunkte (N1, N2, N3) und des wenigstens einen verdeckten Punkts (P; Q1, Q2) zueinander präzise vorbestimmt ist, worin:
wenigstens drei Aufnahmen (720) vorgesehen sind, worin jede Aufnahme (720) mit dem Trägerelement (710) verbunden ist und jede Aufnahme (720) zum Aufnehmen wenigstens eines Anmesselements (770) ausgebildet ist, wobei jedes Anmesselement (770) einen der wenigstens drei Messpunkte (M1, M2, M3) definiert; und
nach der Kopplung des Kopplungselements (740) an das Halteelement (780) die wenigstens drei Messpunkte (M1, M2; M3) und der wenigstens eine verdeckte Punkt (P; Q1, Q2) in der vorbestimmten relativen Lage zueinander sind.

5. Präzisionsmesskörper (100; 200; 300; 400; 500; 600; 700) nach einem der vorhergehenden Ansprüche, wobei die relative Lage des wenigstens einen verdeckten Punkts (P; Q1, Q2) und des wenigstens einen Messpunkts (M), der wenigstens zwei Messpunkte (M1, M2) bzw. der wenigstens drei Messpunkte (N1, N2, N3) zueinander **dadurch** bzw. zusätzlich präzise vorbestimmt ist, dass die präzise räumliche Lage wenigstens eines fixen Punkts (F1, F2) des Großbauteils (190; 290; 690; 790) vorbestimmt ist und/oder dass wenigstens ein anmessbarer Punkt (A) des Großbauteils präzise vermessen wird und/oder eine Raumrichtung, in der wenigstens zwei der genannten Punkte (M; M1, M2; N1,

6. N2, N3; P; Q1, Q2; F1, F2; A) ausgerichtet sind, vorbestimmt ist und/oder eine Ebene, welche wenigstens drei der genannten Punkte (M; M1, M2; N1, N2, N3; P; Q1, Q2; F1, F2; A) enthält, vorbestimmt ist.

7. Präzisionsmesskörper nach einem der vorhergehenden Ansprüche, worin das Halteelement den wenigstens einen verdeckten Punkt umfasst und/oder definiert, oder worin das Kopplungselement nach der Kopplung an das Halteelement den wenigstens einen verdeckten Punkt umfasst und/oder definiert.

8. Präzisionsmesskörper nach einem der vorhergehenden Ansprüche, worin jede Aufnahme eine Justiereinrichtung umfasst.

9. Präzisionsmesskörper nach einem der vorhergehenden Ansprüche, worin das Trägerelement ein Stabelement umfasst und das Kopplungselement an einem Ende des Stabelements angeordnet ist.

10. Präzisionsmesskörper nach Anspruch 8 in Kombination mit Anspruch 2 oder in Kombination mit einem der Ansprüche 5 bis 7 und Anspruch 2, worin die Lage der wenigstens zwei Aufnahmen an dem Stabelement so gewählt ist, dass in Längsrichtung des Stabelements der Abstand zwischen dem Ende des Präzisionsmesskörpers, an dem das Kopplungselement angeordnet ist, und der dazu näher gelegenen Aufnahme kleiner ist als der Abstand zwischen der näher gelegenen Aufnahme und der entfemter gelegenen Aufnahme, vorzugsweise im Verhältnis von 1:2.

11. Präzisionsmesskörper nach einem der vorhergehenden Ansprüche, worin das Kopplungselement eine Hülse, einen Zylinder, eine Kugel, eine ebene Fläche oder einen Mehrkant umfasst, wobei der Mehrkant vorzugsweise ein Dreikant, ein Vierkant oder ein Sechskant ist, und/oder worin das Kopplungselement eine Form aufweist, die nach der Kopplung an das Halteelement ein Bewegen oder ein Drehen des Trägerelements in Bezug auf das Halteelement verhindert.

12. Präzisionsmesskörper nach Anspruch 10, worin der Mittelpunkt der Kugel den verdeckten Punkt definiert.

13. Präzisionsmesskörper nach einem der vorhergehenden Ansprüche, worin das Kopplungselement zur formschlüssigen Kopplung an das Halteelement ausgebildet ist.

14. Präzisionsmesskörper nach einem der vorhergehenden Ansprüche, worin das Material des Kopplungselements Stahl, vorzugsweise V2A-Edelstahl, umfasst.

15. Präzisionsmesskörper nach einem der vorhergehenden Ansprüche, worin jede Justiereinrichtung derart ausgebildet ist, dass die Position jedes aufzunehmenden Anmesselements in Bezug auf das Trägerelement dreidimensional justierbar ist, vorzugsweise in drei zueinander senkrechten Richtungen, wobei in Kombination mit Anspruch 8 eine Richtung davon die Längsrichtung des Stabelements ist.

16. Präzisionsmesskörper nach einem der vorhergehenden Ansprüche, worin jede Justiereinrichtung derart ausgebildet ist, dass sie mit einer Genauigkeit von besser als 0,1 mm, vorzugsweise besser als 0,05 mm, höchst vorzugsweise besser als 0,02 mm justierbar ist.

17. Präzisionsmesskörper nach einem der vorhergehenden Ansprüche, worin jede eine Justiereinrichtung umfassende Aufnahme ein Kemelement und jede Justiereinrichtung ein Stellelement umfasst, wobei das Kemelement fest mit dem Trägerelement verbunden ist und die Position des Stellelements in Bezug auf das Kemelement verstellbar ist, und wobei weiterhin das Stellelement zum Aufnehmen von wenigstens einem Anmesselement ausgebildet ist.

18. Präzisionsmesskörper nach Anspruch 10, worin jede Justiereinrichtung weiterhin eine Verstelleinrichtung und/oder eine Feststelleinrichtung umfasst, wobei die Verstelleinrichtung zum Verstellen der Position des Stellelements in Bezug auf das Kemelement ausgebildet ist und die Feststelleinrichtung zum Feststellen des Stellelements in Bezug auf das Kemelement ausgebildet ist.

19. Präzisionsmesskörper nach einem der vorhergehenden Ansprüche, worin jede Aufnahme wenigstens eine Magneteinrichtung umfasst, die derart ausgebildet ist, dass jeweils wenigstens ein Anmesselement durch magnetische Kräfte auf der Aufnahme haltbar ist.

20. Präzisionsmesskörper nach einem der vorhergehenden Ansprüche in Kombination mit Anspruch 8, worin das Stabelement einen kreisförmigen Querschnitt hat.

21. Präzisionsmesskörper nach einem der vorhergehenden Ansprüche in Kombination mit Anspruch 8, worin das Stabelement ein Rohr umfasst.

22. Präzisionsmesskörper nach einem der vorhergehenden Ansprüche, worin das Trägerelement für jede Aufnahme eine Aussparung aufweist, in der die jeweilige Aufnahme angeordnet ist.

23. Präzisionsmesskörper nach Anspruch 21 in Kombination mit Anspruch 8, worin jede Aussparung derart ausgestaltet ist, dass der durch das wenigstens eine aufzunehmende Anmesselement definierte wenigstens eine Messpunkt im geometrischen Schwerpunkt des Querschnitts des Stabelements angeordnet ist.

24. Präzisionsmesskörper nach einem der vorhergehenden Ansprüche, worin jede Aufnahme zum Aufnehmen wenigstens eines Retroreflektors, einer optischen Messmarke, einer lichtreflektierenden Kugel, eines lichtreflektierenden Würfels, eines lichtreflektierenden Quaders, eines anderen einfachen geometrischen Körpers oder eines sonstigen optisch oder taktil anmessbaren Objekts als Anmesselement ausgebildet ist.

25. Präzisionsmesskörper nach einem der vorhergehenden Ansprüche in Kombination mit Anspruch 8, worin entlang des Stabelements wenigstens ein Verstärkungselement angeordnet ist, vorzugsweise zwei Verstärkungselemente angeordnet sind, um die Trägerstruktur des Stabelements zu verstärken.

26. Präzisionsmesskörper nach Anspruch 24, worin jedes Verstärkungselement ein Rohr umfasst.

27. Präzisionsmesskörper nach Anspruch 24 oder 25, worin das Material des Verstärkungselements Aluminium und/oder Plastik und/oder Titan und/oder GFK-Material und/oder CFK-Material, wobei die Fasern des CFK-Materials vorzugsweise im Wesentlichen unidirektional in einer Längsrichtung des Trägerelements verlaufen, und/oder ein anderes leichtes und stabiles Material umfasst.

28. Präzisionsmesskörper nach einem der vorhergehenden Ansprüche, worin das Material des Trägerelements Aluminium und/oder Plastik und/oder Titan und/oder GFK-Material und/oder CFK-Material, wobei die Fasern des CFK-Materials vorzugsweise im Wesentlichen unidirektional in einer Längsrichtung des Trägerelements verlaufen, und/oder ein anderes leichtes und stabiles Material umfasst.

29. Präzisionsmesskörper nach einem der vorhergehenden Ansprüche, worin das Kopplungselement ein Kompensationselement zum Kompensieren von thermischen Längenänderungen umfasst.
